# DEMANDE DE BREVET EUROPEEN

(11) **EP 2 592 051 A1**
(43) Date de publication de la demande: **15.05.2013**
(21) Numéro de dépôt: 11188658.6
(22) Date de dépôt: 10.11.2011
(51) Int. Cl.: C02F 1/44, C02F 3/28

(54) **Procédé et dispositif de traitement et de purification d'eaux usées**

(71) Demandeur: VCS Environment, 3321 Berchem (LU)
(72) Inventeur: Canquery, Fabrice, 1300 Wavre (BE); Richer, Catherine, 34070 Montpellier (FR)
(74) Mandataire: Dennemeyer & Associates S.A.

(57) **Abrégé**

La présente invention concerne un procédé de traitement et de purification d'eaux usées comprenant dans l'ordre les étapes suivantes:
- extraire de l'eau clarifiée à partir d'une unité multi-modules et,
- capter de la chaleur et produire de l'eau de haute qualité de manière conjointe et simultanée et,
- produire de l'énergie par au moins un réacteur (35) chauffé par de la chaleur récupérée par au-moins une pompe à chaleur (32) et
- assurer la conduite multi-objectifs de l'unité multi-modules.

La présente invention concerne aussi un dispositif multi modulaire de traitement et de purification d'eaux usées et son utilisation. La présente invention porte essentiellement sur la notion de récupération d'énergie de façon conjointe et simultanée à la production d'eau recyclée de haute qualité.

## Description

La présente invention concerne un procédé de traitement et de purification d'eaux usées selon la revendication 1, un dispositif multi modulaire de mise en oeuvre du procédé selon la revendication 10, un dispositif multi modulaire de traitement et de purification d'eaux usées selon la revendication 11 et une utilisation du dispositif selon la revendication 15.

La présente invention concerne aussi un système de production in situ d'eau de haute qualité, y compris d'eau potable, à partir des eaux usées, à faible empreinte environnementale, pour des immeubles et des blocs d'immeubles ou pour des usines.

### Domaine d'application :

La gestion du cycle urbain de l'eau comprenant notamment:
- les systèmes de production et de distribution d'eau potable, soit à partir de ressources en eau douce, soit à partir de ressources en eau salée,
- les systèmes de collecte et de traitement des eaux résiduaires, en particulier les eaux usées domestiques.

L'approvisionnement en eau de sites sous la pression de ressources insuffisantes par rapport à leur besoins (éloignement des ressources, région à stress hydrique), comprend notamment :
- les complexes touristiques à l'écart des systèmes centralisés de distribution
- les industries consommatrices d'eau de qualité (bonne ou très élevée).

L'homme du métier intervenant dans la présente invention doit posséder des connaissances en hydroélectricité, hydraulique, eaux usées, centrales bioénergétiques et en traitement des eaux recyclées.

### Etat de la Technique:

D'une manière générale, la recherche d'art antérieur n'a pas révélé de brevet ou de publications décrivant des inventions proches ou identiques à celles revendiquées dans la présente demande de brevet : pour illustrer cela, trois brevets US et un article sont analysés ci-après.

Le brevet US N°6838000 (N° de Publication20030070986) divulgue un procédé d'utilisation d'eaux usées comprenant la récupération séparée d'eaux grises et/ou noires et une membrane de filtration de ces eaux. Un procédé de production d'eau potable à partir d'eaux grises y est aussi mentionné. Un dispositif de production d'eau potable à partir d'eaux grises et un dispositif d'utilisation d'eaux noires y est divulgué.

US 20030070986 montre que les fèces sont séparées des urines alors qu'aucune séparation n'est nécessaire dans la présente invention. US 20030070986 divulgue une production de méthane (CH4) mais aucune utilisation in situ n'est en faite (traitement anaérobie par digestion: réduction des matières évacuées). US 20030070986 ne divulgue aucune étape de récupération de chaleur. US 20030070986 est un procédé qui consomme énormément d'énergie. US N° 20030070986 ne porte pas sur les volets énergétiques et sur le contrôle avancé, objets de la présente invention.

Le brevet US N°6290852 concerne un procédé et un dispositif de purification et/ou de traitement d'eaux uses communales et/ou industrielles, particulièrement pour une utilisation d'installations marines comprenant un dispositif de réactions biologiques aérobies dans lequel sont reçues les eaux usées à traiter et/ou à purifier. Une biomasse à haute concentration est mis en suspension dans le dispositif et les eaux usées y sont ajoutées. Les eaux usées pré-purifiées ou pré-traitées sont fournies à un dispositif comprenant une membrane de séparation dans lequel une séparation en un corps filtré (perméat) et en un corps de rétention (retentate) est effectuée. Le corps de rétention est au-moins partiellement retourné au dispositif de réaction, alors que le corps perméable est soit évacué comme eau réutilisable ou pure ou est retourné au dispositif de réaction. Le brevet US N°6290852 ne comporte ni intégration hydraulique, ni intégration énergétique.

La publication de brevet US N°20080201018 divulgue un dispositif de gestion d'un procédé de traitement d'eaux usées résidentielles comprenant une unité de contrôle in situ. L'unité de contrôle fournit un contrôle local et des alarmes et envoie des rapports de statuts et/ou des alarmes à un centre de contrôle éloigné via un dispositif télémétrique. Le centre de contrôle éloigné envoie des informations concernant le procédé disponible par un site internet. US N°20080201018 développe un système de supervision et non pas de contrôle avancé d'un procédé tel que proposé dans la présente invention.

Un **Article** de Ralf Otterpohl, Andrea Albold and Martin Oldenburg, Otterpohl Wasserkonzepte, Kanalstraβe 52, D-23552 Lübeck, Allemagne dont le titre est "Differentiating Management of Water Resources and Waste in Urban Areas" divulgue que la tâche principale des dispositifs d'assainissement est de conserver les sols fertiles. Les nouveaux procédés intégrés de gestion d'assainissement et de déchets devront respecter différents niveaux de qualité : les eaux noires avec les déchets biologiques, les eaux grises avec les eaux de pluie et les déchets non biodégradables.

Cet article montre qu'il y a des enjeux et des besoins pour des traitements décentralisés en milieu urbains, et qu'aucune des solutions proposées ne s'appuie sur l'une ou plusieurs des solutions objet des revendications de la présente invention.

L'état de la technique le plus proche est le brevet US 20030070986. Les différences entre la présente invention et US 20030070986 sont que les étapes b) c) et d) de la revendication 1 de la présente invention ne sont pas divulguées dans US 20030070986.

L'effet technique fournit par les différences mentionnées ci-dessus est d'améliorer la qualité de l'eau, d'augmenter le taux d'utilisation de l'énergie interne (chimique et thermique) des eaux usées et de stocker de l'énergie récupérée (énergie électrique et/ou fluide sous forme comprimé).

Le problème à résoudre par la présente invention est de capter de la chaleur et produire de l'eau de haute qualité de manière conjointe et simultanée et, de produire de l'énergie par de la chaleur récupérée et assurer la conduite multi-objectifs de l'unité multi-modules.

Aucun document de l'art antérieur ne divulgue la combinaison des étapes a) à d) de la revendication 1.

Dans les dispositifs centralisés actuellement mis en oeuvre en milieu urbain pour produire et distribuer de l'eau potable, puis pour collecter et traiter les eaux usées, il n'est prévu aucune action de traitement au point d'usage, ce qui engendre:
- la nécessité de prévoir une sur-qualité de l'eau potable produite dans l'usine centralisée, de façon à ce que la qualité résiduelle au point d'usage soit suffisante malgré une dégradation continue dans les réseaux de distribution,
- la nécessité de recourir à des doses élevées de désinfectant, le plus souvent chlorés, pour lutter contre la contamination microbienne dans les réseaux,
- la nécessité d'une surproduction d'eau potable pour compenser les importantes fuites sur les réseaux (qui restent des infrastructures très sollicitées et fragiles), ce qui conduit à une sur exploitation des ressources en eau douce,
- la nécessité de construire des linéaires (tuyaux) importants de canalisations pour desservir les gros utilisateurs éloignés des usines de production d'eau et limités en ressources, tels que les complexes touristiques ou certaines industries, ce qui représente de lourds investissements et dégrade fortement l'empreinte environnementale de la gestion de l'eau sur le territoire concerné,
- une mise en oeuvre très difficile des moyens de lutte contre une attaque bio-terroriste sur les points centralisés (usine de potabilisation, réservoirs).

Tous ces inconvénients des systèmes centralisés se traduisent par des surcoûts souvent non compensés par les économies d'échelle espérées sur les grands systèmes.

Pour pallier à ces inconvénients, des améliorations incrémentales sont proposées, telles des programmes de lutte contre les fuites ou encore un suivi plus élaboré pour une meilleure gestion de la désinfection chimique, mais le plus souvent c'est un recours à des traitements centralisés encore plus sophistiqués et à des capacités de production supplémentaires qui sont proposées, conduisant à des coûts d'investissements et d'exploitation toujours plus élevés. Le recours à des systèmes semi-centralisés (« satellites ») reste confidentiel car il n'attenue que très peu les inconvénients des systèmes centralisés.

Les principales mises en oeuvre de systèmes de traitement in situ, au point d'usage, sont les dispositifs de traitement des eaux grises (par exemple : eaux de douche, eaux de baignoire, eaux de lavabos et bidets) en pied d'immeuble en vue de leur utilisation pour certains usages dans le même bâtiment (WC, lavages de sols et de véhicules, arrosages) principalement appliqués par contrainte réglementaire au Japon et dans quelques autres pays: la recherche de l'art antérieur montre qu'il n'existe pas de traitement complet des eaux usées in situ, au point d'usage, en vue d'un recyclage à des niveaux supérieurs à 50%. Tous les systèmes actuellement proposés sont fortement consommateurs d'énergie: ainsi, une amélioration de l'empreinte EAU est obtenue au prix d'une augmentation des émissions de CO₂, ce qui engendre une faible amélioration de l'empreinte environnementale globale. Le procédé de traitement et de purification d'eaux usées est défini dans la revendication 1 de la présente invention, le dispositif multi modulaire de mise en oeuvre du procédé est défini dans la revendication 10, le dispositif multi modulaire de traitement et de purification d'eaux usées est défini dans la revendication 11 et l'utilisation du dispositif est défini dans la revendication 15.

La solution envisagée par la présente invention consiste à généraliser l'utilisation de dispositifs décentralisés de recyclage in situ des eaux usées, à basse énergie, permettant de baisser la pression sur les ressources et d'adopter une nouvelle gestion de la qualité de l'eau avec un dernier saut qualitatif in situ. Cette production locale d'eau recyclable permet de satisfaire différents usages du lieu concerné sans faire appel à de l'eau potable provenant du système centralisé : il en résulte une forte baisse de la pression sur les ressources naturelles en eau (usage plus intensif de l'eau).

La présente invention concerne un procédé continu de production d'eau de haute qualité (eau potable, eau de procédé) à partir d'eaux usées sur le site même de leur émission, ce procédé nécessitant de faibles quantités d'énergie exogène. Il est possible de récupérer une énergie chimique (matières carbonées) et une énergie calorifique ou thermique des eaux usées (température de départ des eaux usées (environ 28°C) lors de l'entrée dans le dispositif multi modulaire). Le terme « récupérer de l'énergie » peut être défini par le fait de valoriser l'énergie chimique et l'énergie thermique contenues dans les eaux usées, de préférence sans utiliser de l'énergie additionnelle, sans utiliser de l'énergie exogène.

Le système associe, dans un mode de réalisation préféré de la présente invention, quatre composantes sur la base d'une intégration optimisant à la fois les flux d'eau, les flux de matière et les flux d'énergie :
- un premier module extrait de l'eau clarifiée (zéro particules) à partir des eaux usées (eaux noires et/ou eaux grises), tout en concentrant l'énergie chimique (par exemples : les matières fécales) contenue dans ces mêmes eaux usées (matières carbonées),
- un second module produit de l'eau de très haute qualité, désinfectée, à partir de l'eau clarifiée, la potabilité pouvant être aisément garantie par un dispositif multi barrières avec contrôle d'intégrité en ligne en continu.
- un troisième module produit de l'énergie :
   - à partir du carbone récolté dans l'effluent (matières fécales) ou provenant d'autres sources de matières organiques tels que les déchets organiques de cuisine, les graisses et huiles alimentaires (biogaz servant à produire de l'électricité),
   - à partir de la chaleur récupérée sur les équipements des deux premiers modules,
   - à partir de la chaleur récupérée dans les eaux usées (différence de température comprise entre 8°Cet 15°Centre les eaux usées de départ (ex : 28°C) et l'eau de haute qualité finale (ex : 16°C)),
- un quatrième module assure la conduite avancée de l'ensemble grâce à une analyse multicritères en continu des paramètres de procédé et de qualité d'eau mesurés en ligne :
   les systèmes de contrôle-commande sont mis en oeuvre de façon intégrée sur l'ensemble des modules opérationnels grâce à des algorithmes originaux.

La présente invention est originale en ce que l'énergie interne des eaux usées est employée pour réaliser leur recyclage à des taux supérieurs à 50% (compris entre 50% et 90%) et en ce que le système de conduite avancée porte simultanément sur l'optimisation des flux hydrauliques et sur l'optimisation énergétique.

La présente invention peut traiter une quantité substantielle d eaux usées (eaux grises et/ou noires) comprise entre 10 m³/jour et 700 m³/jour ou plus, de préférence 15 m³/jour pour un dispositif de la présente invention utilisé par un nombre d'habitants compris entre 1 et 100 habitants et considéré comme étant un «petit» dispositif, ou de préférence 350 m³/jour pour un dispositif de la présente invention utilisé par un nombre d habitants compris entre 101 et 1999 habitants et considéré comme étant un dispositif «moyen», ou encore de préférence 700 m³/jour pour un dispositif de la présente invention utilisé par un nombre d'habitants supérieur à 2000 habitants et considéré comme étant un «grand» dispositif.

La présente invention concerne un procédé in situ de traitement et de purification d'eaux usées comprenant dans l'ordre les étapes suivantes:
a) extraire de l'eau clarifiée à partir d'une unité multi-modules et,
b) capter de la chaleur et produire de l'eau de haute qualité de manière conjointe et simultanée et,
c) produire de l'énergie par au moins un réacteur (35) chauffé par de la chaleur (énergie thermique) récupérée par au-moins une pompe à chaleur (32) et
d) assurer la conduite multi-objectifs de l'unité multi-modules.

Le réacteur de l'étape c) peut contenir des microorganismes méthanogènes (produisant du méthane). Les microorganismes méthanogènes peuvent être choisis parmi la liste non limitative suivante : Methanobacterium bryantii, Methanobacterium formicum, Methanobrevibacter arboriphilicus, Methanobrevibacter gottschalkii, Methanobrevibacter ruminantium, Methanobrevibacter smithii, Methanocalculus chunghsingensis, Methanococcoides burtonii, Methanococcus aeolicus, Methanococcus deltae, Methanococcus jannaschii, Methanococcus maripaludis, Methanococcus vannielii, Methanocorpusculum labreanum, Methanoculleus bourgensis (Methanogenium olentangyi & Methanogenium bourgense), Methanoculleus marisnigri , Methanofollis liminatans, Methanogenium cariaci, Methanogenium frigidum, Methanogenium organophilum, Methanogenium wolfei , Methanomicrobium mobile, Methanopyrus kandleri, Methanoregula boonei, Methanosaeta concilii, Methanosaeta thermophila, Methanosarcina acetivorans, Methanosarcina barkeri, Methanosarcina mazei, Methanosphaera stadtmanae, Methanospirillium hungatei, Methanothermobacter defluvii (Methanobacterium defluvii), Methanothermobacter thermautotrophicus (Methanobacterium thermoautotrophicum), Methanothermobacter thermoflexus (Methanobacterium thermoflexum), Methanothermobacter wolfei (Methanobacterium wolfei), Methanothrix sochngenii.

L'étape c) du procédé de la présente invention est une étape anaérobie.

L'étape c) produit de l'énergie sous forme thermique et électrique grâce au couplage du réacteur (35) avec une mini centrale de cogénération (39). L'étape c) du procédé produit additionnellement de l'énergie sous forme d'un fluide sous pression.

La mini centrale de cogénération (39) utilise le méthane produit par le réacteur (35) pour produire de l'énergie thermique et électrique.

L'étape c) produit un rendement en biogaz par rapport à un effluent entrant compris entre 30% et 65% lorsqu'on travaille sur les plages de températures mésophiles (càd avec des microorganismes croissant à des températures comprises entre 25°C et 45 °C) et thermophiles (càd avec des microorganismes croissant à des températures comprises entre 45°C et 70°C) lors d'une utilisation pour un effluent domestique (appartement, hotel). L'étape c) produit un rendement en biogaz par rapport à un effluent entrant compris entre 50% et 95%, de préférence entre 50% et 90%, lorsqu'on travaille sur les plages de températures mésophiles et thermophiles lors d'une utilisation pour un effluent industriel (combinaison appartements - hôtels - hôpitaux - restaurants - écoles ...).

La conduite multi objectifs des étapes a) à c) du procédé de la présente invention est assurée conjointement et simultanément et comprend l'optimisation hydraulique, énergétique et la tenue des objectifs de traitement.

Le dispositif multi modulaire de mise en oeuvre du procédé de la présente invention comprend une unité multi modules, dans lequel les étapes a) à d) sont mises en oeuvre. Dispositif multi modulaire de traitement et de purification d'eaux usées de la présente invention dans lequel une unité multi modules comprend quatre modules consistant en:
i) un premier module d'extraction de l'eau clarifiée comprenant au moins un appareil de séparation des éléments grossiers (10) et au moins une unité de concentration (11),
ii) un second module de production d'eau de haute qualité comprenant au moins un premier étage de filtration (22) et au moins un échangeur thermique (31) et au moins un second étage de filtration (26) et au moins un reminéralisateur,
iii) un troisième module de production d'énergie comprenant au moins une pompe à chaleur (32) et au moins un réacteur de production de biogaz (35) et pouvant comprendre au moins une unité de régulation du réacteur (34) et au moins une mini centrale de cogénération (39),
iv) un quatrième module pour assurer la conduite multi objectifs de l'unité multi-module comprenant au moins un automate et au moins un ordinateur.

Le premier module du dispositif selon la présente invention comprend en outre au moins une unité de préparation physico-chimique (15) et au moins une unité de traitement d'humidité des débris (16).

Le second module du dispositif selon la présente invention comprend en outre au moins un dispositif de clarification (21) et au moins une unité de contrôle d'intégrité en ligne (25).

Le dispositif selon la présente invention peut être utilisé pour produire in situ de l'eau de haute qualité à partir d'eaux usées en récupérant de l'énergie thermique et de l'énergie chimique.

Le dispositif selon la présente invention peut aussi être utilisé pour stocker de l'énergie sous forme de fluide sous pression.

La présente invention concerne un procédé intégré de production in situ d'eau de haute qualité à partir d'eaux usées caractérisé en ce que les niveaux de qualité requis pour les recyclages d'eaux usées sont atteints avec des intrants énergétiques au moins deux fois plus faible que les meilleurs systèmes de recyclage, et par la mise en oeuvre intégrée d'un module original d'extraction primaire d'eaux clarifiées, d'un module de production d'eaux recyclables et d'un module de récupération des énergies fatales.

Le procédé de la présente invention est caractérisé en ce qu'un système de production locale d'énergie à partir des énergies fatales (énergie chimique et thermique) co-extraites des eaux usées couvre ou compense plus de la moitié des besoins en énergie du procédé. Le procédé de la présente invention est piloté par un système de contrôle-commande caractérisé en ce qu'un jeu d'algorithmes communs assure un pilotage global et cohérent des transformations de matières, des flux hydrauliques, des qualités d'eau et des consommations d'énergie.

Le procédé de la présente invention est caractérisé en ce qu'un ensemble de logiciels originaux (ordinateurs) intégrant gestion des énergies et gestion des eaux assure leur pilotage intégré pour l'obtention d'eaux de qualité recyclable à très faible empreinte environnementale.

### Description détaillée de modes de réalisation préférés de l'invention:

Diverses réalisations de la présente invention sont décrites à titre d'exemple uniquement, avec des renvois aux figures dans lesquelles :
- la figure 1 est une représentation schématique du dispositif et procédé d'une première réalisation préférée de la présente invention,
- la figure 2 est une représentation schématique du dispositif et procédé d'une seconde réalisation préférée de la présente invention,
- la figure 3A est une représentation schématique du dispositif et procédé d'une troisième réalisation préférée de la présente invention
- la figure 3B est une représentation schématique du dispositif et procédé d'une variante de la troisième réalisation préférée de la présente invention.

Le premier module de la présente invention combine un appareil (10) de séparation des éléments grossiers tels que fibres et fillasses (y compris cheveux & poils), débris solides de taille supérieure à 1 mm quelque soit leur matière, et une unité de concentration (11) produisant un flux d'eau totalement clarifiée (12) et un flux d'effluent concentré (13). Pour les préparer à l'extraction d'eau claire, l'appareil de prétraitement (10) reçoit les eaux usées entrantes, et s'adapte à chaque type d'eaux usées en utilisant une ou plusieurs opérations unitaires telles que mais non exclusivement pré filtration, hydrocyclonage.

L'appareil de prétraitement (10) est autonettoyant par utilisation d'une fraction des flux obtenus sur l'unité de concentration (11) grâce aux boucles de recirculation (14). Les débris retenus par l'appareil de prétraitement (10) sont débarrassés de leur humidité par un appareil (16) tel que mais non exclusivement égouttage, pressage, séchage, ..., puis évacués vers les circuits spécialisés (17). L'unité (11) consiste en un tamis moléculaire tel que mais non exclusivement des membranes, des tamis fins, ou tout autre milieu ou matériau ayant un seuil de coupure inférieur à 10 µm. La sélectivité de la rétention et l'efficacité de la concentration sont contrôlées par le choix des conditions hydrodynamiques appliquées l'unité (11), complété en tant que de besoin par la mise en oeuvre sur les effluents concentrés (13) entrants d'une préparation physico-chimique (15) telle que mais non exclusivement une floculation, une coagulation, un traitement électrique ou thermique, une modification de pH ou de force ionique.

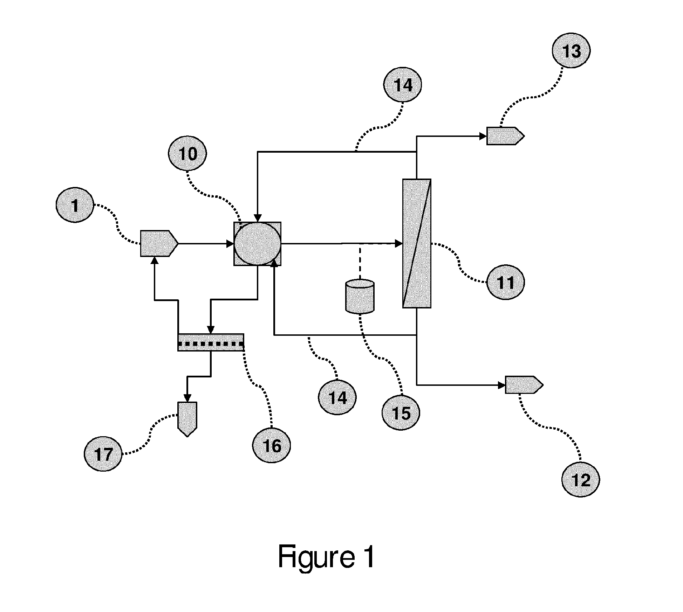

La figure 1 de la présente invention représente le premier module de préparation-concentration montrant les éléments et leurs signes de référence suivants :
1 : Eaux usées brutes
10 : Appareil de séparation des débris
11 : Unité de concentration
12 : Flux d'eau clarifiée
13 : Flux concentré
14 : Boucles de recirculation
15 : Préparation physico-chimique
16 : Appareil de traitement d'humidité des débris
17 : Débris évacués

Le second module de la présente invention combine plusieurs barrières de filtration pour produire des eaux recyclables à partir du flux d'eau clarifié (12). Un dispositif de clarification (21) permet d'alimenter le module à partir d'autres sources (2) telles que mais non exclusivement l'eau potable du réseau public, des eaux souterraines, de l'eau dessalée, de l'eau de pluie. En tant que de besoin, ce dispositif (21) peut recevoir les eaux clarifiées (12) notamment lors de dégradation accidentelle de leur qualité. Un premier étage de filtration (22) comprend des filtres membranaires basse pression, de nature organique ou minérale, à peau interne ou externe, et opérés soit en mode de filtration frontale, soit en mode de filtration tangentielle. La séparation résulte en la production d'un très faible flux de concentrat (24) qui est évacué et d'un flux d'eau désinfectée recyclable (23). Ce dernier flux est soit utilisé directement pour des usages appropriés à sa qualité, en particulier sa désinfection complète, soit orienté vers le second étage membranaire (26) pour un traitement encore plus poussé. Le système de filtration membranaire (22) est sous le contrôle continu du testeur d'intégrité en ligne (25) qui interrompt automatiquement l'alimentation du module (12) et (2) en cas de défaut sur les filtres. Le second étage membranaire (26) consiste en des filtres membranaires sous haute pression tels que mais non exhaustivement nanofiltration, osmose directe ou inverse qui permettent de retenir les éléments minéraux en excès. Deux flux sont obtenus, un concentrat salin (27) qui est évacué, et une eau recyclable de très haute qualité (28) dont la minéralisation peut être ajustée de façon très contrôlée par le reminéralisateur (29).

Les récupérateurs de chaleur (31) placés sur les différents flux clairs du second module font partie du troisième module et sont régulés par le quatrième module pour la recherche d'un optimum entre récupération de thermies et performance de filtration sur les deux étages du second module.

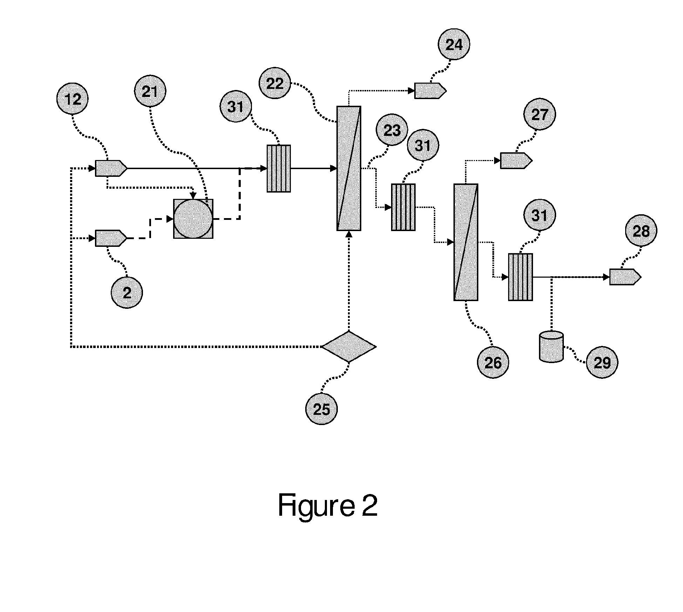

La figure 2 de la présente invention représente le second module de production d'eaux recyclées montrant les éléments et leurs signes de référence suivants :
2 : Sources d'eau alternatives
12 : Eau claire issue du premier module
21 : Dispositif de clarification
22 : Premier étage de filtration
23 : Eau recyclable haute qualité
24 : Concentrat premier étage
25 : Unité de contrôle d'intégrité en ligne
26 : Second étage de filtration
27 : Concentrat second étage
28 : Eau recyclée très haute qualité
29 : Reminéralisateur
31 : échangeurs thermiques

Le troisième module de la présente invention rassemble les dispositifs de récupération de thermies (31) et l'unité de production d'énergie (32). Au point d'usage, le delta (la différence) de température pour la récupération de la chaleur des eaux usées est de 8 à 15°C, ce qui permet d'installer des échangeurs thermiques (31) couplés ou non à une ou plusieurs pompes à chaleur (32) par les boucles (33) de fluide caloporteur. Les thermies prises aux eaux usées sont transmises au réacteur anaérobie (35) par la boucle (36) circulant dans sa double paroi, assurant la majeure partie de son chauffage jusqu'au point de fonctionnement mésophile ou thermophile. Le réacteur (35) est alimenté par le flux d'effluent concentré (13) et il produit du biogaz (38) qui est immédiatement converti en électricité (39a) et en vapeur (39b) par la mini centrale de cogénération (39). L'électricité verte (39a) est livrée au réseau en compensation de l'électricité employée ou en excès. Les thermies de la vapeur sont apportées à la boucle (36) de chauffage du réacteur (35), cette boucle étant asservie aux consignes de température. Une unité de régulation (35a) contrôle et maintien les paramètres essentiels du réacteur (35) tels que mais non exclusivement le pH, la concentration en produits réactionnels, la quantité de biogaz produite, la proportion de méthane (CH₄) dans le biogaz, la concentration en inhibiteurs. Le réacteur (39) peut être à culture libre, de tous types, ou à culture fixée, fluidisée ou non, et il répond aux normes de sécurité. La fraction (37) d'effluent non convertie en biogaz est évacuée.

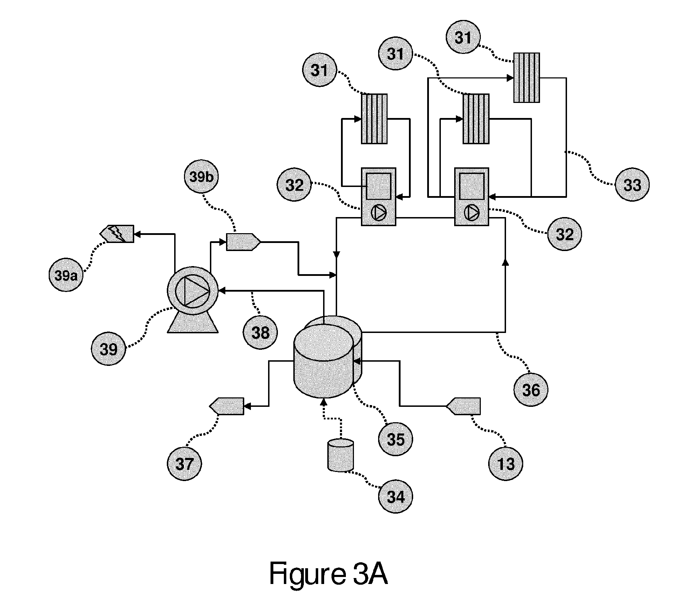

La figure 3A de la présente invention représente le troisième module de récupération et de production d'énergie montrant les éléments et leurs signes de référence suivants :
13 : Flux d'effluent concentré
31 : Echangeurs thermiques
32 : Pompes à chaleur
33 : Boucles de couplage échangeur-PAC
34 : Unité de régulation du réacteur
35 : Réacteur de production de biogaz
36 : Boucle de chauffage du réacteur
37 : Purge du réacteur
38 : Biogaz
39 : Mini centrale de cogénération
39a : Electricité verte
39b : Vapeur

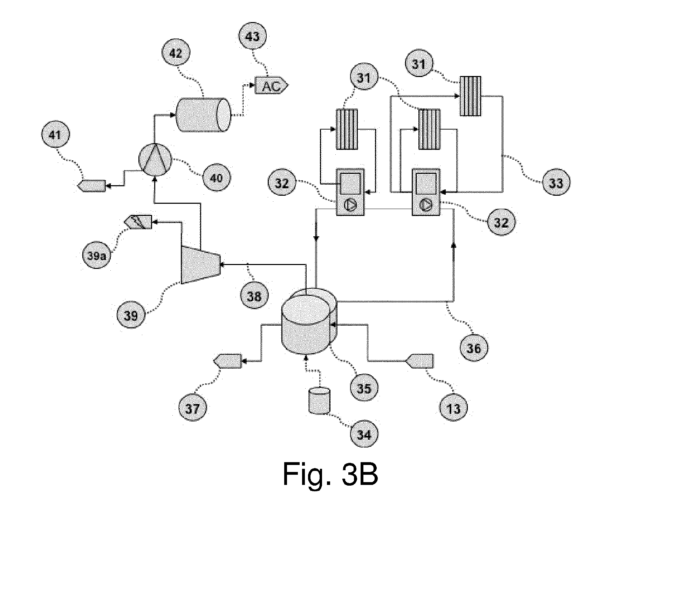

La figure 3B montre un autre mode de réalisation du troisième module de la présente invention dans lequel le biogaz (38) produit par le réacteur (35) est immédiatement converti en électricité (39a) par une turbine (39). L'électricité verte (39a) est livrée au réseau en compensation de l'électricité employée ou en excès. Le gaz (41) issu de la combustion est repris dans un compresseur d'air (40). Le fluide comprimé (43) (de préférence l'air ou l'eau) constitue une forme d'énergie qui peut être stockée dans un réservoir sous pression (42) en vue d'une utilisation différée (par exemple pour le nettoyage sous pression des ordures).

La figure 3B de la présente invention représente un autre mode de réalisation du troisième module de récupération et de production d'énergie montrant les éléments et leurs signes de référence suivants :
13 : Flux d'effluent concentré
31 : Echangeurs thermiques
32 : Pompes à chaleur
33 : Boucles de couplage échangeur-PAC
34 : Unité de régulation du réacteur
35 : Réacteur de production de biogaz
36 : Boucle de chauffage du réacteur
37 : Purge du réacteur
38 : Biogaz
39 : Mini centrale de cogénération
39a : Electricité verte
40 : Compresseur d'air
41 : Gaz de combustion
42 : Réservoir d'air comprimé
43 : Air comprimé

Le quatrième module de la présente invention recueille l'information transmise par l'ensemble des instruments et capteurs des trois premiers modules. De façon originale, un suivi détaillé des informations sur l'énergie est assuré en même temps que le suivi usuel des paramètres des procédés, sur le même automate et le même ordinateur, ce qui permet la mise en place d'une conduite avancée multi-objectifs par des algorithmes nouveaux optimisant à la fois les performances du procédé et l'empreinte environnementale. Le terme « conduite avancée » peut être défini comme la combinaison des étapes de mesure et de contrôle et de commande de la présente invention.

En synthèse, le tableau 1 ci-après confirme l'absence d'art antérieur pertinent et confirme la nouveauté et l'activité inventive de la présente invention:

**Tableau 1 : tableau comparatif du dispositif de la présente invention avec l'art antérieur**

| **Fonction technique** | **Traitement** | **Economie d'énergie** | **Optimum hydraulique** | **Intégrations d'usage** |
|---|---|---|---|---|
| **Critère(s)** | Qualité de l'eau recyclée produite (grades) | Taux d'utilisation de l'énergie interne des eaux usées (%) | Compacité du dispositif « Empreinte au sol » (plus compact = 1) (moins compact = 10) | Fonctions disponibles (nombre & liste) |
| **Plage du critère (pire <> meilleure)** | 1<>6 | 0%<>100% | 10 <> 1 | 1 fonction <> 5 fonctions |
| **Dispositif de la présente invention** | entre 5 et 6 | 50% à 90% | 1,5 à 1 | 5: - traitement eaux usées - production eau recyclée - préservation ressources en eau - utilisation énergies fatales - pilotage multi-objectifs |
| US 6838000 **(**US Pub N °20030070986**)** | entre 4 et 5 | 0% | 7 à 5 | 3 : - traitement eaux usées - production eau recyclée - préservation ressources en eau |
| US 6290852 | 4 | 0% | 3 à 1,5 | 2 : - traitement eaux usées - production eau recyclée |
| US 20080201018 | entre 2 et 3 | 0% | 9 à 7 | 2: - traitement eaux usées - pas de pilotage multi-objectifs, mais pilotage multi-installations |

L'homme du métier sait comment réaliser les tests du tableau 1.

La qualité de l'eau recyclée produite est notée de 1 à 6 (1 étant la note la plus mauvaise et 6 étant la meilleure note).

Le taux d'utilisation de l'énergie interne des eaux usées est exprimé en % (0% étant le % le plus faible et 100% étant le % le plus élevé). L'énergie interne des eaux usées correspond à de l'énergie chimique (par exemple les matières carbonées tels que les matières fécales) et à de l'énergie thermique (différence de température entre la température d'entrée des eaux usées dans le dispositif de la présente invention (environ 28°C) et la température finale de l'eau de haute qualité (environ 16°C)).

La compacité du dispositif est notée de 1 à 10 (la note 1 correspondant au dispositif le plus compact et la note 10 correspondant au dispositif le moins compact). La compacité du dispositif est définie par la surface au sol couverte par le dispositif.

Le tableau 1 prouve que le dispositif de la présente invention produit de l'eau potable ayant la meilleure qualité tout en utilisant 50% à 90% de l'énergie interne des eaux usées, alors que les documents de l'état de la technique n'utilisent jamais l'énergie interne des eaux usées.

Ainsi, l'homme du métier ayant connaissance des 3 documents US et combinant ces 3 documents n'aurait jamais pu réaliser le dispositif de la présente invention car il lui manque l'enseignement « comment produire de l'énergie (énergie électrique, thermique, sous forme d'un fluide sous pression) à partir de l'énergie interne des eaux usées ».

Certaines caractéristiques de l'invention qui sont décrites sous forme de mode de réalisation séparés par soucis de clarté, peuvent aussi être fournies en combinaison dans un mode de réalisation unique. A l'opposé certaines caractéristiques de l'invention qui sont décrites sous forme de mode de réalisation en combinaison dans un mode de réalisation unique, peuvent aussi être fournies séparément sous forme de plusieurs modes de réalisation séparés.

Bien que l'invention ait été décrite en conjonction avec des modes de réalisation spécifiques de celui-ci, il est évident que plusieurs alternatives, modifications et variations peuvent être détectées par un homme du métier. Ainsi, nous avons l'intention d'englober de telles alternatives, modifications et variations qui tombent dans la portée des revendications de la présente invention.

## Revendications

1. **Procédé** de traitement et de purification d'eaux usées comprenant dans l'ordre les étapes suivantes:
a) extraire de l'eau clarifiée à partir d'une unité multi-modules et,
b) capter de la chaleur et produire de l'eau de haute qualité de manière conjointe et simultanée et,
c) produire de l'énergie par au moins un réacteur (35) chauffé par de la chaleur récupérée par au-moins une pompe à chaleur (32) et
d) assurer la conduite multi-objectifs de l'unité multi-modules.

2. Procédé selon la revendication 1 dans lequel le réacteur de l'étape c) contient des microorganismes méthanogènes.

3. Procédé selon la revendication 1 dans lequel l'étape c) est une étape anaérobie.

4. Procédé selon la revendication 1 dans lequel l'étape c) produit de l'énergie sous forme thermique et/ou électrique grâce au couplage du réacteur (35) avec une mini centrale de cogénération (39).

5. Procédé selon la revendication 4 dans lequel l'étape c) produit additionnellement de l'énergie sous forme d'un fluide sous pression.

6. Procédé selon la revendication 4 ou 5 dans lequel ladite mini centrale de cogénération (39) utilise le méthane produit par le réacteur (35).

7. Procédé selon la revendication 1 dans lequel l'étape c) produit un rendement en biogaz compris entre 30% et 65% lorsqu'on travaille sur les plages de températures mésophiles et thermophiles lors d'une utilisation pour un effluent domestique.

8. Procédé selon la revendication 1 dans lequel l'étape c) produit un rendement en biogaz compris entre 50% et 95% lorsqu'on travaille sur les plages de températures mésophiles et thermophiles lors d'une utilisation pour un effluent industriel.

9. Procédé selon la revendication 1 dans lequel la conduite multi objectifs des étapes a) à c) est assurée conjointement et simultanément et comprend l'optimisation hydraulique, énergétique et la tenue des objectifs de traitement.

10. **Dispositif** multi modulaire de mise en oeuvre du procédé selon les revendications 1 à 9 comprenant une unité multi modules, dans lequel les étapes a) à d) sont mises en oeuvre.

11. **Dispositif** multi modulaire de traitement et de purification d'eaux usées dans lequel une unité multi modules comprend quatre modules consistant en :
i) un premier module d'extraction de l'eau clarifiée comprenant au moins un appareil de séparation des éléments grossiers (10) et au moins une unité de concentration (11),
ii) un second module de production d'eau de haute qualité comprenant au moins un premier étage de filtration (22) et au moins un échangeur thermique (31) et au moins un second étage de filtration (26) et au moins un reminéralisateur,
iii) un troisième module de production d'énergie comprenant au moins un réacteur (35) chauffé par de la chaleur récupérée par au-moins une pompe à chaleur (32),
iv) un quatrième module pour assurer la conduite multi objectifs de l'unité multi-module comprenant au moins un automate et au moins un ordinateur.

12. Dispositif selon la revendication 11 dans lequel le troisième module comprend au moins une unité de régulation (34) du réacteur et au moins une mini centrale de cogénération (39).

13. Dispositif selon la revendication 11 dans lequel le premier module comprend en outre au moins une unité de préparation physico-chimique (15) et au moins une unité de traitement d'humidité des débris (16).

14. Dispositif selon la revendication 11 dans lequel le second module comprend en outre au moins un dispositif de clarification (21) et au moins une unité de contrôle d'intégrité en ligne (25).

15. **Utilisation** du dispositif selon les revendications 11 à 14 pour produire in situ de l'eau de haute qualité à partir d'eaux usées en récupérant de l'énergie thermique et de l'énergie chimique.

16. Utilisation du dispositif selon la revendication 15 comprenant en outre le stockage de l'énergie sous forme de fluide sous pression.
